# EUROPÄISCHE PATENTSCHRIFT

(11) **EP 3 440 654 B1**
(45) Veröffentlichungstag und Bekanntmachung des Hinweises auf die Patenterteilung: **20.01.2021**
(21) Anmeldenummer: 17718485.0
(22) Anmeldetag: 30.03.2017
(51) Int. Cl.: G08G 1/14, G06Q 50/30, G07B 15/02

(54) **VERFAHREN UND SYSTEM ZUR ERFASSUNG VON GEPARKTEN FAHRZEUGEN**
METHOD AND SYSTEM FOR DETECTING PARKED VEHICLES
PROCÉDÉ ET SYSTÈME DE DÉTECTION DE VÉHICULES STATIONNÉS

(30) Priorität: 08.04.2016 DE 102016106513
(43) Veröffentlichungstag der Anmeldung: 13.02.2019
(73) Patentinhaber: Cleverciti Systems GmbH, 81379 München (DE)
(72) Erfinder: HOHENACKER, Thomas, 82319 Starnberg (DE)
(74) Vertreter: Manitz Finsterwald Patent- und Rechtsanwaltspartnerschaft mbB
(86) Internationale Anmeldenummer: PCT/EP2017/057500
(87) Internationale Veröffentlichungsnummer: WO 2017/174427

(56) Entgegenhaltungen:
- WO-A1-2015/004325
- US-A1- 2006 187 043
- US-A1- 2014 335 897

## Beschreibung

Die vorliegende Erfindung betrifft ein Verfahren zur Erfassung von geparkten Fahrzeugen.

Ein Verfahren mit den Merkmalen des Oberbegriffs des Anspruchs 1 ist aus der WO 2015/004325 A1 bekannt. Ferner offenbart die US 2014/0335897 A1 ein System zur Überwachung und Steuerung von Parkvorgängen.

Auf großen Parkplatzflächen, insbesondere auf großen Firmenparkplätzen mit mehreren hundert oder sogar tausend Parkplätzen kann aufgrund der großen Fläche, über die sich solche Parkplätze erstrecken, das Auffinden eines freien Parkplatzes (d.h. eines freien Parkplatzbereichs) aufwändig und zeitintensiv sein.

Es besteht daher ein Interesse daran, den Belegungsstatus von Parkplatzbereichen zu kennen und möglichen Benutzern der Parkplatzflächen mitzuteilen.

Zudem können innerhalb der Parkplatzfläche Parkplatzbereiche bestimmten Benutzergruppen vorbehalten sein. Solche Benutzergruppen können beispielsweise Menschen mit einer Behinderung, ältere Menschen, Fahrer von Elektroautos oder - im Fall von Firmenparkplätzen - Mitglieder des Managements sein. Eine Überprüfung, ob nur Berechtigte auf den ihnen zugewiesenen Parkplatzbereichen parken, kann den ständigen Einsatz von Parküberwachungspersonal notwendig machen, wodurch die Überwachung von Parkberechtigungen ebenfalls aufwändig und teuer sein kann.

Es ist die der Erfindung zugrunde liegende Aufgabe, ein Verfahren zur Erfassung von geparkten Fahrzeugen anzugeben, welches den Aufwand zur Erfassung der geparkten Fahrzeuge minimiert.

Diese Aufgabe wird erfindungsgemäß durch ein Verfahren gemäß Anspruch 1 gelöst.

Gemäß dem Verfahren der Erfindung
- werden Parkplatzbereiche in einer Parkplatzfläche erkannt und/oder festgelegt,
- wird in oder an einem Fahrzeug ein Transponder angeordnet,
- sendet der Transponder automatisch wiederholt ein Erkennungssignal aus,
- wird das Erkennungssignal von zumindest einer Funkeinrichtungen empfangen,
- wird mittels einer Steuereinrichtung anhand des Erkennungssignals eine Position des Fahrzeugs berechnet und eine Identifikation des Transponders ermittelt,
- wird festgestellt, ob sich das Fahrzeug in einem der Parkplatzbereiche befindet,
- wird anhand des Erkennungssignals ermittelt, ob das Fahrzeug parkt,
- wird, sofern das Fahrzeug auf einem der Parkplatzbereiche parkt, die Identifikation des Transponders und der von dem Fahrzeug verwendete Parkplatzbereich an einen Registrierungsserver übermittelt, wobei der Registrierungsserver anhand der Identifikation des Transponders ein Statussignal für den verwendeten Parkplatzbereich ausgibt.

Erfindungsgemäß wird ein Transponder in einem Fahrzeug vorgesehen, dessen Position mittels des Erkennungssignals festgestellt wird. Unter einem Erkennungssignal können dabei auch mehrere zeitlich beabstandete Signale verstanden werden, die beispielsweise periodisch von dem Transponder ausgesandt werden.

Nachdem festgestellt wurde, dass das Fahrzeug, in oder an welchem der Transponder angeordnet ist, auf einem der Parkplatzbereiche parkt, wird die Identifikation des Transponders an einen Registrierungsserver übertragen, woraufhin der Registrierungsserver ein Statussignal für den verwendeten Parkplatzbereich ausgibt.

Die Erfindung macht sich die Erkenntnis zunutze, dass das Vorsehen eines Transponders in oder an einem Fahrzeug sowohl die Ortung als auch die Identifizierung des Fahrzeugs ermöglicht. Das erfindungsgemäße Verfahren gestattet es daher aufgrund der vollautomatischen Ortung und Identifizierung des Transponders, eine Parkplatzbelegung vollständig automatisch zu ermitteln.

Bei den Fahrzeugen kann es sich beispielsweise um Personenkraftwagen (PKWs), Lastkraftwagen (LKWs), Motorräder, Fahrräder, Anhänger und dergleichen handeln. Ebenfalls ist es möglich, dass es sich bei den Fahrzeugen um Schiffe oder Flugzeuge handelt. In diesem Fall können die Parkplatzbereiche Anlegestellen eines Hafens oder Parkpositionen auf einem Flughafen sein.

Nachfolgend werden die einzelnen Schritte des Verfahrens genauer erläutert.

Die Parkplatzbereiche innerhalb der Parkfläche können beispielsweise einmalig festgelegt werden. Alternativ können die Parkplatzbereiche auch anhand der Position von Fahrzeugen bzw. deren Transpondern erkannt werden. Zusätzlich können auch Bereiche festgelegt oder ermittelt werden, in welchen ein Parken grundsätzlich unerwünscht oder verboten ist (Verbotszonen). Solche Bereiche können z.B. eine Straße oder eine Feuerwehranfahrtszone sein.

Eine Parkplatzfläche bezeichnet dabei einen Flächenbereich, in welchem sich mehrere Parkplatzbereiche befinden. Ein Parkplatzbereich kann auch als einzelner Stellplatz bezeichnet werden, d.h. ein Parkplatzbereich bietet üblicherweise einem Fahrzeug Platz. Die Parkplatzbereiche können unterschiedliche Größen aufweisen und so beispielsweise an die Größe von PKWs, LKWs oder Fahrrädern angepasst sein.

Der in oder an dem Fahrzeug angeordnete Transponder kann beispielsweise im Handschuhfach oder hinter der Windschutzscheibe mitgeführt werden und eine Batterie oder einen Akku zur Energieversorgung umfassen. Der Transponder kann auch an einer Außenfläche des Fahrzeugs angebracht oder fest in einem Fahrzeug verbaut sein und beispielsweise in einem Rückspiegel des Fahrzeugs angeordnet sein. Der Transponder kann in diesem Fall mit dem Bordnetz des Fahrzeugs gekoppelt sein. Der Transponder kann etwa die Größe einer Zigarettenschachtel, einer Streichholzschachtel oder einer Kreditkarte aufweisen und automatisch das Erkennungssignal aussenden. Das automatische Aussenden kann dabei in gleichbleibenden zeitlichen Abständen ohne eine Einwirkung von außen erfolgen. Alternativ kann der Transponder als Antwort auf ein von außen eintreffendes Anfragesignal, welches z.B. von der Funkeinrichtung ausgesandt wird, automatisch das Erkennungssignal aussenden. Bei dem Erkennungssignal und dem Anfragesignal kann es sich um Radiosignale, d.h. Funksignale, handeln.

Das Erkennungssignal wird von der Funkeinrichtung (auch Anker genannt) empfangen. Die Funkeinrichtung kann beispielsweise eine schwenkbare Richtantenne umfassen, um die Position des Transponders zu ermitteln. Die Funkeinrichtung kann ortsfest angebracht sein, beispielsweise in einer erhöhten Position an oder in einer Beleuchtungseinrichtung der Parkplatzfläche. Alternativ kann die Funkeinrichtung auch mobil sein und z.B. an einem Parküberwachungsfahrzeug angebracht sein. Aus einer Einfallsrichtung des Erkennungssignals zusammen mit einer Position der Funkeinrichtung kann die Position des Transponders bzw. die Position des dem Transponder zugeordneten Fahrzeugs ermittelt werden.

Ebenfalls ist es möglich, zumindest drei ortsfest zueinander beabstandete Funkeinrichtungen zu verwenden. In diesem Fall wird das Erkennungssignal von den drei Funkeinrichtungen empfangen, wobei die absolute oder relative Position des Fahrzeugs (d.h. die Position des Transponders) mittels Triangulation aufgrund von Laufzeitunterschieden zu den einzelnen Funkeinrichtungen ermittelt werden kann. Die Relativpositionen der Funkeinrichtungen zueinander können dabei bekannt sein. Alternativ können auch die Absolutpositionen, wie z.B. die GPS-Koordinaten, der Funkeinrichtungen bekannt sein. Anstelle von drei Funkeinrichtungen können insbesondere auch 4, 5 oder 6 Funkeinrichtungen verwendet werden, wodurch die Genauigkeit der Ortung erhöht werden kann.

Bei großen Parkplatzflächen können mehrere Funkeinrichtungen gleichmäßig über die Parkplatzfläche verteilt sein, um die Ortung von Fahrzeugen auf der gesamten Parkplatzfläche zu ermöglichen.

In dem Erkennungssignal kann ein Identifikationscode des Transponders enthalten sein, der beispielsweise eine eindeutige Seriennummer des Transponders angibt. Anhand des Identifikationscodes kann die Steuereinrichtung die Identifikation des Transponders ermitteln.

Nachdem die Position des Fahrzeugs bekannt ist, kann durch einen Vergleich mit den bekannten Parkplatzbereichen festgestellt werden, ob sich das Fahrzeug in einem der Parkplatzbereiche befindet, d.h. auf einem der Parkplatzbereiche steht, oder beispielsweise in einer Verbotszone parkt.

Weiterhin kann anhand des Erkennungssignals ermittelt werden, ob das Fahrzeug parkt. Dies kann beispielsweise derart erfolgen, dass die Position des Fahrzeugs anhand mehrerer aufeinanderfolgender Erkennungssignale mehrmals berechnet wird, wobei bei einer über eine vorbestimmte Zeitdauer gleichbleibenden Position davon ausgegangen wird, dass das Fahrzeug parkt.

Wenn festgestellt wurde, dass das Fahrzeug auf einem der Parkplatzbereiche parkt, so wird die Identifikation des Transponders und der von dem Fahrzeug verwendete Parkplatzbereich an den Registrierungsserver übermittelt, wobei der Registrierungsserver anhand der Identifikation des Transponders ein Statussignal für den jeweiligen Parkplatzbereich ausgibt. In dem Statussignal kann enthalten sein, ob der jeweilige Parkplatzbereich belegt ist und/oder von welcher Art von Fahrzeug und/oder von welchem Benutzer der jeweilige Parkplatzbereich belegt wird. Der Registrierungsserver kann auch jeweils für mehrere oder alle Parkplatzbereiche der Parkplatzfläche ein Statussignal ausgeben. Alternativ kann die Belegung von mehreren oder allen Parkplatzbereichen der Parkplatzfläche in einem einzigen Statussignal enthalten sein. Das Statussignal kann z.B. in Form eines digitalen Datensignals ausgegeben werden.

Insbesondere kann das erfindungsgemäße Verfahren wiederholt durchgeführt werden, wobei das Verfahren beispielsweise für jedes neu auf der Parkplatzfläche eintreffende Fahrzeug wiederholt wird. Bevorzugt werden Erkennungssignale nahezu ständig (z.B. mehrmals pro Sekunde) ausgesendet oder angefordert, so dass die Veränderung der Position eines Fahrzeugs nachvollziehbar ist. Auch kann eine Vielzahl von Transpondern (und damit eine Vielzahl von Fahrzeugen) gleichzeitig geortet werden, wodurch auch große Parkplatzflächen überwacht werden können.

Vorteilhafte Weiterbildungen der Erfindung sind der Beschreibung, der Zeichnung sowie den Unteransprüchen zu entnehmen.

Gemäß einer ersten vorteilhaften Ausführungsform ermittelt der Registrierungsserver anhand der Identifikation des Transponders einen Berechtigungsstatus für den verwendeten Parkplatzbereich, wobei der Berechtigungsstatus in dem Statussignal enthalten ist.

Der Registrierungsserver kann allgemein einen Berechtigungsstatus ermitteln. Dies bedeutet, der Registrierungsserver überprüft, ob der Identifikation des Transponders eine Berechtigung zum Parken auf dem jeweils verwendeten Parkplatzbereich zugeordnet ist oder nicht. Hierzu kann in dem Registrierungsserver eine Nachschlagetabelle vorliegen, in der für jeden Transponder (und damit für den entsprechenden Benutzer und/oder das entsprechende Fahrzeug) die jeweiligen Berechtigungen eingetragen sind. Beispielsweise kann für einen Transponder, der einem Elektroauto zugeordnet ist, die Berechtigung zum Parken auf Parkplatzbereichen, welche für Elektroautos reserviert sind, in der Nachschlagetabelle eingetragen sein.

Dementsprechend kann für Parkplatzbereiche der Parkplatzfläche eine erforderliche Berechtigung zum Parken festgelegt sein. Beispielsweise kann angegeben sein, dass vorbestimmte Parkplatzbereiche nur von Elektroautos und/oder nur von Mitgliedern des Managements einer Firma verwendet werden dürfen. Die Berechtigungen können ebenfalls in einer Nachschlagetabelle in dem Registrierungsserver gespeichert sein. Zusätzlich können die Berechtigungen auf einer Außenseite des Transponders vermerkt sein, beispielsweise in Form einer aufgedruckten Karte, die die Parkplatzbereiche zeigt, für die eine Parkberechtigung besteht. Alternativ kann die Berechtigung auch von einem Display des Transponders angezeigt werden. Auf diese Weise kann ein Benutzer an dem Transponder erkennen, wo für Ihn vorgesehene Parkplatzbereiche vorhanden sind.

Das Statussignal kann z.B. umfassen, dass ein Parkplatzbereich für Elektroautos von einem Elektroauto belegt ist, d.h. dass der Parkplatzbereich von einem Fahrzeug mit korrekter Berechtigung benutzt wird. In diesem Fall kann ein positiver Berechtigungsstatus vorliegen. Das Statussignal kann zusätzlich enthalten, seit welchem Zeitpunkt (Uhrzeit/Datum) der Parkplatzbereich verwendet wird und welches konkrete Fahrzeug den Parkplatzbereich benutzt. Das Statussignal kann also einen Belegungsstatus des jeweiligen Parkplatzbereichs angeben und, falls der Parkplatzbereich besetzt ist, angeben, ob das parkende Fahrzeug eine entsprechende Berechtigung besitzt.

Die automatische Berechtigungsermittlung stellt dabei sicher, dass unberechtigt parkende Fahrzeuge mit geringem Aufwand erkannt werden können. Auf diese Weise kann Parküberwachungspersonal teilweise eingespart werden, was zu einer Kostenreduktion führen kann.

Liegt keine Berechtigung vor, beispielsweise wenn ein "normaler" Benutzer auf einem Parkplatz für Elektroautos parkt, kann das Statussignal angeben, dass ein negativer Berechtigungsstatus vorliegt. In einem solchen Fall kann z.B. Parküberwachungspersonal informiert werden. Alternativ kann z.B. ein dem Parkplatzbereich zugeordnetes Warnsignal aktiviert werden, beispielsweise kann ein Blinklicht anzeigen, dass das jeweilige Fahrzeug ohne Berechtigung parkt.

Die Erfassung von belegten Parkplätzen und die Ermittlung des Berechtigungsstatus werden somit stark vereinfacht. Hierzu bedarf es bevorzugt keiner Interaktion des Fahrers. Insbesondere können durch das erfindungsgemäße Verfahren teure Bodensensoren zur Fahrzeugerkennung eingespart werden. Die oftmals erheblichen Investitions- und Wartungskosten für solche Bodensensoren können dann entfallen.

Gemäß einer weiteren vorteilhaften Ausführungsform werden Statussignale betreffend mehrere Parkplatzbereiche an einen Parkplatzserver und/oder ein mobiles Anzeigegerät übermittelt. Der Parkplatzserver und/oder das mobile Anzeigegerät können eine Übersicht über freie und belegte Parkplatzbereiche anhand der Statussignale anzeigen. Insbesondere kann es sich bei dem mobilen Anzeigegerät um ein Mobiltelefon handeln, welches mittels einer App die freien und belegten Parkplatzbereiche anzeigt. Der Parkplatzserver kann die freien und belegten Parkplatzbereiche mittels einer Webseite darstellen. Der Parkplatzserver und/oder das mobile Anzeigegerät können auf den Registrierungsserver zugreifen, um Informationen über belegte und freie Parkplatzbereiche abzufragen.

Beispielsweise kann das mobile Anzeigegerät verwendet werden, um auf einem großen Firmenparkplatz oder auch auf einem öffentlichen Parkplatz (z.B. einem Kundenparkplatz) einen Fahrer zu einem freien Parkplatzbereich zu leiten. Hierzu kann dem mobilen Anzeigegerät mitgeteilt werden, über welche Berechtigungen der Fahrer bzw. das Fahrzeug verfügt. So kann das mobile Anzeigegerät einem Mitglied des Managements den Weg zu einem für das Management reservierten freien Parkplatzbereich weisen.

Ein ähnliches Anwendungsszenario kann z.B. bei Park&Ride Parkplätzen eingesetzt werden. Hierbei können die Transponder von einem Bahnunternehmen ausgegeben werden, wobei sich Bahnreisende mittels des mobilen Anzeigegeräts darüber informieren können, wo freie Parkplatzbereiche vorhanden sind.

Gemäß einer weiteren vorteilhaften Ausführungsform wird an einer Zufahrt zu der Parkplatzfläche ein Transponder an Fahrzeuge ohne Transponder ausgegeben. Beispielsweise kann bei der Zufahrt eine automatische Ausgabestation für Transponder vorgesehen sein, die den Transponder ähnlich einem Parkticket ausgibt. Auf diese Weise können z.B. Gäste auf einem Firmenparkplatz durch den ausgegebenen Transponder als solche identifiziert werden. Die ausgegebenen Transponder können beim Verlassen der Parkplatzfläche an einer automatischen Abgabestation zurückgegeben werden.

Auf diese Weise kann z.B. die Verweildauer von Gästen auf dem Firmenparkplatz überwacht werden. Entsprechend ist es auch möglich, die Parkdauer und damit auch die Anwesenheitszeit von Mitarbeitern zu erfassen.

Aufgrund der Erfassung der Verweildauer ist es zusätzlich möglich, mittels des Transponders auch die Abrechnung von Parkgebühren durchzuführen. Beispielsweise kann die automatische Abgabestation für den Transponder die entstandenen Parkgebühren einfordern. Auf diese Weise kann der Transponder sowohl zur Erfassung der Parkposition als auch zur Bezahlung des Parkvorgangs verwendet werden.

Auch zur Überwachung von Taxiständen kann das Verfahren eingesetzt werden. Vorausgesetzt wird hierbei, dass sämtliche Taxis über einen jeweiligen Transponder verfügen. Werden an verschiedenen Taxiständen jeweils Funkeinrichtungen angebracht, so kann ermittelt werden, wie viele Taxis an einem jeweiligen Taxistand parken. Andere Taxifahrer können dann z.B. mittels des mobilen Anzeigegeräts überprüfen, wo noch freie Parkplatzbereiche an Taxiständen vorhanden sind.

Eine weitere Einsatzmöglichkeit ist die Nachverfolgung von Fahrzeugen in der Fahrzeugproduktion. Hierbei werden häufig Fahrzeuge in großer Zahl auf Parkplatzflächen abgestellt. Ist jedes dieser Fahrzeuge mit einem Transponder ausgestattet so können die auf beliebigen Parkplatzbereichen abgestellten Fahrzeuge visualisiert werden, beispielsweise auf einer Webseite des Parkplatzservers. Um die produzierten Fahrzeuge dem jeweiligen Transponder zuzuordnen, kann automatisiert ein Barcode oder ein RFID-Chip des Fahrzeugs gescannt und dem jeweiligen Transponder des Fahrzeugs zugeordnet werden. Ein Auffinden bestimmter Fahrzeuge, z.B. zum Verladen, kann dann mittels des mobilen Anzeigegeräts erfolgen, das die Position des Fahrzeugs visualisieren kann.

Weiter bevorzugt wird eine Zufahrtsbeschränkung der Parkplatzfläche, beispielsweise mittels einer Schranke, erst dann aufgehoben, wenn erkannt wird, dass das Fahrzeug über einen Transponder verfügt und insbesondere eine Berechtigung zum Parken auf zumindest einem Parkplatzbereich der Parkplatzfläche aufweist. Zusätzlich kann überprüft werden, ob zumindest einer der Parkplatzbereich frei ist, für den das Fahrzeug eine Berechtigung besitzt. Die Zufahrtsbeschränkung kann auch dann aufgehoben werden, wenn mittels der automatischen Ausgabestation ein Transponder ausgegeben wurde.

Gemäß einer weiteren vorteilhaften Ausführungsform wird anhand der Identifikation des Transponders und/oder anhand des verwendeten Parkplatzbereichs und weiterhin anhand eines Tarifs eine Parkgebühr für den jeweils verwendeten Parkplatzbereich berechnet. Insbesondere kann der Registrierungsserver einen Bezahlvorgang einleiten, wenn eine Parkgebühr anfällt.

Dies bedeutet, der Registrierungsserver kann überprüfen, welcher Geldbetrag für das Parken auf einem bestimmten Parkplatzbereich fällig ist und leitet daraufhin gegebenenfalls einen Bezahlvorgang ein. Der Bezahlvorgang wird beispielsweise dann nicht eingeleitet, wenn das Parken auf dem Parkplatzbereich momentan kostenlos ist.

Bei dem Bezahlvorgang kann es sich um ein Abbuchen von einem Konto, von einer Kreditkarte, von einem PayPal-Account oder um das automatische Erstellen und Versenden einer Rechnung handeln. Alternativ kann der Registrierungsserver auch auf eine Datenbank zugreifen, in welcher eingezahlte Guthaben gespeichert sind und das Guthaben für den jeweiligen Transponder bzw. den jeweiligen Fahrzeughalter um die ermittelte Parkgebühr reduzieren.

Vorteilhafterweise wird der Bezahlvorgang erst dann eingeleitet, wenn das Fahrzeug den Parkplatzbereich wieder verlassen hat, d.h. der Parkvorgang beendet ist. Die zahlbare Parkgebühr kann dann anhand der Dauer des Parkvorgangs ermittelt werden. Hierzu kann festgestellt werden, ob das Fahrzeug den Parkplatzbereich verlassen hat, wobei zusätzlich eine Dauer des Parkvorgangs an den Registrierungsserver übermittelt werden kann.

Eine derartige automatische Abrechnung von Parkgebühren stellt dabei sicher, dass die Parkgebühren für einen Parkvorgang bezahlt werden, wodurch Einnahmeverluste durch unberechtigt nicht bezahlte Parkgebühren vermieden werden können. Zudem kann Parküberwachungspersonal eingespart werden, was zu einer Kostenreduktion führen kann. Der Bezahlvorgang für die Parkgebühren kann auf diese Weise stark vereinfacht werden und bedarf keiner Interaktion des Fahrers.

Gemäß einer weiteren vorteilhaften Ausführungsform wird ein Stillstand des Fahrzeugs, welcher länger als eine vorbestimmte Zeitdauer andauert, als Parken des Fahrzeugs registriert. Dies bedeutet, ein Stillstand von länger als beispielsweise zwei oder fünf Minuten kann als Parken definiert sein. Hierdurch kann ausgeschlossen werden, dass z.B. ein im Stau stehendes Fahrzeug, welches sich sporadisch bewegt, als parkendes Fahrzeug angesehen wird. Insbesondere kann die Berechtigung erst dann geprüft werden, wenn das Fahrzeug als parkend registriert ist.

Gemäß einer weiteren vorteilhaften Ausführungsform wird der Identifikation des Transponders von dem Registrierungsserver ein Fahrzeughalter und/oder ein Fahrzeugkennzeichen zugeordnet und wird anhand von persönlichen Daten des Fahrzeughalters und/oder des Fahrzeugkennzeichens der Berechtigungsstatus ermittelt. Ebenfalls ist es möglich, dass anhand von persönlichen Daten des Fahrzeughalters und/oder des Fahrzeugkennzeichens ein Tarif bestimmt wird. Dies bedeutet, dass in dem Registrierungsserver persönliche Daten der Fahrzeughalter und/oder Fahrzeugkennzeichen gespeichert sein können, wobei ein jeweiliger Transponder einem jeweiligen Fahrzeughalter und/oder einem jeweiligen Fahrzeugkennzeichen zugeordnet ist. Der jeweilige Berechtigungsstatus und/oder Tarif für verschiedene Fahrzeughalter können sich aufgrund der persönlichen Daten unterscheiden, beispielsweise können Anwohner, Bahnticketinhaber, behinderte Menschen, Flatrate-Bucher usw. Zugang zu besonderen Parkplatzbereichen haben. Weiterhin kann mit der Identifikation des Transponders auch eine Schadstoffklasse des jeweiligen Fahrzeugs verknüpft sein, wodurch für schadstoffarme Fahrzeuge mehr Parkplatzbereiche zur Verfügung gestellt werden können.

Durch die Möglichkeit, beispielsweise mittels des mobilen Anzeigegeräts den Belegungszustand eines Parkplatzes schon vor Ankunft zu kennen, kann z.B. die Benutzung von Park&Ride Parkplätzen gefördert werden, wenn für diese Park&Ride Parkplätze zwingend das Mitführen eines Transponders vorgeschrieben ist.

Bevorzugt wird der Berechtigungsstatus und/oder der Tarif auch anhand der Uhrzeit, des Wochentags und/oder der Lage des verwendeten Parkplatzbereichs ermittelt. Hierdurch wird die Möglichkeit geschaffen, beispielsweise zu Stoßzeiten andere Berechtigungen zu vergeben oder höhere Parkgebühren zu verlangen, wohingegen z.B. nachts oder an Sonntagen das Parken für jedermann und umsonst gestattet sein kann.

Gemäß einer weiteren vorteilhaften Ausführungsform ist der Identifikation des Transponders ein Guthaben zugeordnet, welches bei dem Bezahlvorgang um die Parkgebühr verringert wird. Somit sind beispielsweise auch Prepaid-Modelle möglich, wobei das Guthaben einem vorher eingezahlten Geldbetrag entspricht. Dem Guthaben kann auch eine Adresse des Fahrzeughalters zugeordnet sein. Alternativ kann der Fahrzeughalter aber auch anonym bleiben.

Bevorzugt kann der Transponder für einen geringen Geldbetrag von z.B. 10 € verkauft werden, wobei der gezahlte Geldbetrag bereits als Guthaben verbucht werden kann. Ist das Guthaben verbraucht, kann der Fahrer das Guthaben - ähnlich zu einer Prepaidkarte eines Mobiltelefons - durch Zukaufen von neuem Guthaben wieder aufladen.

Gemäß einer weiteren vorteilhaften Ausführungsform sendet der Transponder das Erkennungssignal verschlüsselt aus, wobei das Erkennungssignal insbesondere mittels eines asymmetrischen Verschlüsselungsverfahrens erzeugt wird. Hierdurch kann unterbunden werden, dass das Erkennungssignal des Transponders abgefangen, kopiert und von einem Dritten wiederholt ausgesandt wird, um den ursprünglichen Transponder nachzuahmen. Auf diese Weise wird erschwert, dass die Identität des Transponders gestohlen wird. Bevorzugt kann das Erkennungssignal einen variablen Anteil aufweisen, beispielsweise einen Zeitstempel, eine Zufallszahl oder einen Teil des Anfragesignals, wobei der variable Anteil ebenfalls verschlüsselt wird. Hierdurch kann die Nachahmung des Erkennungssignals weiter erschwert werden.

Erfindungsgemäß ist der Transponder ausgebildet, eine Bewegung des Fahrzeugs zu erkennen, wobei eine Häufigkeit des Aussendens von Erkennungssignalen nach einem vorbestimmten Zeitraum ohne eine Bewegung des Fahrzeugs reduziert wird. Vorzugsweise wird ein Aussenden des Erkennungssignals ganz unterbunden. Dies bedeutet, eine Häufigkeit des Aussendens von Erkennungssignalen kann variabel gestaltet sein, insbesondere in Abhängigkeit von Bewegungen des Fahrzeugs. Hierdurch kann erreicht werden, dass der Transponder eines stehenden bzw. parkenden Fahrzeugs nicht unnötig viele Erkennungssignale aussendet. Auf diese Weise kann Energie im Transponder eingespart werden. Zudem wird die Funkeinrichtung nicht mit zu vielen Erkennungssignalen konfrontiert, sodass die einzelnen Erkennungssignale besser lokalisiert werden können. Beispielsweise kann die Häufigkeit der Erkennungssignale 5 oder 10 Minuten nach der letzten erkannten Bewegung des Fahrzeugs reduziert werden. Zur Erkennung von Bewegungen des Fahrzeugs kann der Transponder ein GPS-System umfassen, auf ein GPS-System des Fahrzeugs zurückgreifen und/oder einen Beschleunigungssensor und/oder ein Gyroskop umfassen. Verlässt das Fahrzeug seine Parkposition, kann dieser Zustandswechsel z.B. mittels des Beschleunigungssensors erkannt werden, woraufhin die Häufigkeit des Aussendens von Erkennungssignalen wieder erhöht werden kann.

Gemäß einer weiteren vorteilhaften Ausführungsform zeigt der Transponder einen Status an, insbesondere mittels eines Lichtsignals. Das Lichtsignal kann beispielsweise angeben, ob eine Berechtigung zum Parken auf dem jeweiligen Parkplatzbereich vorhanden ist, ob eine Parkgebühr bezahlt wurde und/oder ob eine maximale Parkdauer überschritten wurde. Hierzu kann der Transponder eine RGB-LED (Rot-Grün-Blau LED) umfassen und von der Funkeinrichtung über den Status informiert werden. Dies bedeutet, die Funkeinrichtung kann dem Transponder mitteilen, ob eine Berechtigung zum Parken vorliegt oder ob eine Parkgebühr bezahlt wurde. Beispielsweise kann der Transponder hinter der Windschutzscheibe angeordnet sein und grün leuchten, wenn eine Berechtigung zum Parken vorliegt und die Parkgebühr bezahlt wurde. Ein rotes Leuchten kann angeben, dass keine Berechtigung zum Parken vorliegt.

Es ist bevorzugt, wenn ein Hinweissignal ausgegeben wird, sofern ein Fahrzeug außerhalb der Parkplatzbereiche parkt. Das Hinweissignal kann beispielsweise dann ausgegeben werden, wenn ein Parken in zweiter Reihe, in einer Feuerwehranfahrtszone und dergleichen erkannt wird. Das Hinweissignal kann von der Steuereinrichtung oder von dem Registrierungsserver ausgegeben werden und beispielsweise ein Ordnungsamt oder die Polizei über den unerwünschten Parkvorgang informieren.

Gemäß einer weiteren vorteilhaften Ausführungsform wird eine Auswertung der belegten und freien Parkplatzbereiche vorgenommen und werden Daten der freien Parkplatzbereiche einem Parkleitsystem zugeführt. Sofern das Mitführen eines Transponders in oder an einem Fahrzeug zwingend vorgeschrieben ist, kann anhand des Transponders zwischen freien und belegten Parkplatzbereichen unterschieden werden. Die Anzahl der freien Parkplatzbereiche kann dann einem Parkleitsystem zugeführt werden, wodurch parkplatzsuchende Verkehrsteilnehmer schnell und effektiv zu freien Parkplatzbereichen geleitet werden können. Alternativ oder zusätzlich können die freien Parkplatzbereiche, wie oben beschrieben, auch in einer Datenbank des Parkplatzservers hinterlegt werden, auf die mittels einer Weboberfläche oder einer Applikation eines Smartphones (d.h. des mobilen Anzeigegeräts) zugegriffen werden kann.

Die Auswertung über die belegten und freien Parkplatzbereiche kann auch eine statistische Auswertung umfassen, anhand der Vorhersagen über zukünftig frei werdende Parkplatzbereiche (beispielsweise anhand einer Warteschlangentheorie) getroffen werden können. Hierdurch können Fahrer, die sich noch weit von ihrem Zielgebiet entfernt befinden, so geleitet werden, dass sie bei ihrer Ankunft mit hoher Wahrscheinlichkeit einen freien Parkplatzbereich antreffen.

Besonders bevorzugt wird mittels eines Überwachungssystems die Parkplatzfläche zusätzlich zumindest bereichsweise, bevorzugt optisch, mittels Ultraschall, mittels Radar und/oder mittels Bodensensoren, erfasst, wobei mittels einer Erkennungseinheit freie und besetzte Parkplatzbereiche, insbesondere mittels Bildverarbeitung, bevorzugt anhand von Einzelbildern, erkannt werden. Das Überwachungssystem kann ein Kamerasystem mit einer oder mehreren Kameras umfassen, die die Parkplatzfläche erfassen, wodurch die Verwendung von Bildverarbeitungsalgorithmen ermöglicht werden kann. Alternativ oder zusätzlich kann das Überwachungssystem auch Ultraschallsensoren, Radarsensoren und/oder Bodensensoren umfassen. Die zusätzliche Verwendung eines Überwachungssystems ist insbesondere dann sinnvoll, wenn nicht in jedem Fahrzeug ein Transponder vorhanden ist. Das Überwachungssystem schafft dann die Möglichkeit, unabhängig von vorhandenen Transpondern, freie und besetzte Parkplatzbereiche zu erkennen. Hierbei kann bei Fahrzeugen ohne Transponder der Berechtigungsstatus grundsätzlich als negativ eingestellt sein. Zudem ergibt sich beispielsweise die Möglichkeit, einen anhand des Erkennungssignals erkannten Parkvorgang optisch mittels des Überwachungssystems zu verifizieren.

Insbesondere wird also anhand des Überwachungssystems überprüft, ob ein mittels des Erkennungssignals als parkend identifiziertes Fahrzeug tatsächlich auf dem ermittelten Parkplatzbereich parkt, wobei die Identifikation des Transponders und der von dem Fahrzeug verwendete Parkplatzbereich nur im Fall einer korrekten Ermittlung des Parkvorgangs an den Registrierungsserver übermittelt werden.

Das Überwachungssystem kann ausgebildet sein, festzustellen, ob ein Fahrzeug auf einem bestimmten Parkplatzbereich parkt. Anhand des Überwachungssystems kann aber z.B. nicht das Fahrzeug an sich oder ein Nummernschild des Fahrzeugs erkannt werden.

Gemäß einer weiteren vorteilhaften Ausführungsform wird ein Benachrichtigungssignal ausgegeben, sofern von dem Überwachungssystem ein Fahrzeug auf einem Parkplatzbereich detektiert wird, wobei die Position oder Anwesenheit des Fahrzeugs nicht mittels eines Erkennungssignals festgestellt wurde. Das Benachrichtigungssignal kann dazu dienen, Fahrzeuge ohne Transponder bzw. mit defektem Transponder zu melden, sodass Parküberwachungspersonal gezielt die Bezahlung der Parkgebühren für dieses Fahrzeug (z.B. mittels herkömmlichem Parkschein) überprüfen kann.

Die Erfindung betrifft weiterhin ein System, umfassend zumindest einen Transponder, zumindest eine Funkeinrichtung, eine Steuereinrichtung und einen Registrierungsserver, welcher mittels einer Datenverbindung mit der Steuereinrichtung verbunden ist. Das erfindungsgemäße System zeichnet sich dadurch aus, dass das System zur Durchführung des oben beschriebenen Verfahrens ausgebildet ist.

Gemäß einer vorteilhaften Weiterbildung des Systems sind die Funkeinrichtungen in oder an Straßenleuchten, an Fassaden, an Straßenschildern, in dem Überwachungssystem und/oder an Ampeln angebracht. Dies bedeutet, die Funkeinrichtungen können erhöht über dem Boden angeordnet sein, wodurch sich ein guter Empfang der Erkennungssignale ergibt.

Die Funkeinrichtungen können die Stromversorgung der Straßenleuchte oder der Ampeln mitbenutzen. Hierdurch kann der Installationsaufwand für die Funkeinrichtungen reduziert wird.

Alternativ können die Funkeinrichtungen oder das gesamte System von Solarzellen mit elektrischer Energie versorgt werden. Hierzu können die Funkeinrichtungen jeweils eine Solarzelle umfassen. Die Verwendung von Solarzellen kann den Einsatz des Systems in schlecht erschlossenen Gebieten ermöglichen, z.B. in ländlichen Regionen. Zudem verringern Solarzellen den Aufwand zur Einrichtung des Systems, da beispielsweise nicht jede Funkeinrichtung separat an ein Stromnetz angeschlossen werden muss. In den genannten ländlichen Regionen sind oft Park&Ride Parkplätze vorhanden, die durch die Verwendung von Solarzellen ohne große Investitionen überwacht werden können. Um eine Datenverbindung zu dem Registrierungsserver herzustellen kann eine Mobilfunk-Verbindung als Datenverbindung eingesetzt werden. Bevorzugt kann das System bei der Verwendung von Solarzellen nachts abgeschaltet werden, da Park&Ride Parkplätze üblicherweise nur tagsüber stark frequentiert sind.

Bevorzugt umfasst der Transponder eine Solarzelle, welche den Transponder mit Energie versorgt, wobei der Transponder zur Befestigung an einer Windschutzscheibe eines Fahrzeugs ausgebildet ist. Die Solarzelle kann es erlauben, den Transponder über prinzipiell unbeschränkte Zeiträume zu betreiben, ohne dass beispielsweise eine Batterie gewechselt werden muss. Auf diese Weise wird die Bezahlung von Parkgebühren für einen Benutzer weiter vereinfacht, da der Transponder nur einmalig in dem Fahrzeug z.B. hinter der Windschutzscheibe befestigt werden muss, wobei nachfolgend keine weiteren Wartungsmaßnahmen an dem Transponder notwendig sind. Der Transponder kann beispielsweise eine Klebefläche umfassen, mit welcher der Transponder an der Windschutzscheibe befestigbar ist.

Bevorzugt sind der Transponder und die Funkeinrichtung für eine Funkkommunikation im Frequenzbereich von etwa 2,4 GHz ausgebildet, wobei beispielsweise ein Frequenzbereich von 2,2 GHz bis 2,6 GHz verwendet werden kann. Insbesondere verwenden der Transponder und die Funkeinrichtung WLAN, Bluetooth und/oder ZigBee. Bevorzugt wird das ISM-Band verwendet, das sich im Bereich von 2,4 GHz befindet.

Gemäß einer Ausführungsform sind der Transponder und das mobile Anzeigegerät dasselbe Gerät und insbesondere ein Mobiltelefon (Smartphone). Hierbei kann die Hardware des Mobiltelefons sowohl dazu genutzt werden, die Erkennungssignale auszusenden (z.B. mittels WLAN oder Bluetooth), als auch die freien und belegten Parkplatzbereiche zu visualisieren. Insbesondere kann die erwähnte App auf dem Mobiltelefon das Aussenden der Erkennungssignale veranlassen.

Die Erkennungssignale können sogenannte "Chirp"-Impulse mit veränderlicher Frequenz sein, wobei während eines Impulses die Sendefrequenz von einer Startfrequenz bis zu einer Endfrequenz verändert wird. Die Frequenzveränderung schafft die Möglichkeit, das Erkennungssignal auch bei breitbandiger Hintergrundstrahlung sicher zu detektieren.

Gemäß einer weiteren vorteilhaften Ausführungsform des erfindungsgemäßen Systems ist ein Mobilgerät vorgesehen, welches ausgebildet ist, Erkennungssignale des Transponders zu empfangen, eine Identifikation des Transponders an den Registrierungsserver zu übertragen und von dem Registrierungsserver Informationen über ein dem Transponder zugeordnetes Fahrzeug zu empfangen. Das Mobilgerät kann beispielsweise von Parküberwachungspersonal mitgeführt werden oder in einem Parküberwachungsfahrzeug installiert sein. Mit dem Mobilgerät kann für ein jeweiliges Fahrzeug die Identifikation des Transponders festgestellt werden, wobei mittels eines Rückkanals von dem Registrierungsserver Informationen über das dem jeweiligen Transponder zugeordnete Fahrzeug von dem Mobilgerät empfangen werden können. Das Mobilgerät erlaubt es hierdurch, zu überprüfen, ob ein Transponder auch in dem ihm zugeordneten Fahrzeug vorhanden ist, so dass eine Weitergabe von Transpondern oder eine Mehrfachnutzung von Transpondern in verschiedenen Fahrzeugen unterbunden bzw. mit Sanktionen belegt werden kann.

Besonders bevorzugt ist ein Überwachungssystem zur optischen, zumindest bereichsweisen Erfassung der Parkplatzfläche vorgesehen, wobei das Überwachungssystem ein Kamerasystem und eine Erkennungseinheit umfasst, die ausgebildet ist, freie und besetzte Parkplatzbereiche, insbesondere mittels Bildverarbeitung, bevorzugt anhand von Einzelbildern, zu erkennen. Neben der Erkennung von parkenden Fahrzeugen anhand der Transponder und deren Erkennungssignalen kann - wie oben erläutert - eine zusätzliche Überprüfung der Parksituation mittels des Überwachungssystems erfolgen. Das Überwachungssystem wird im Folgenden noch näher beschrieben.

Bevorzugt umfasst die Erkennungseinheit des Überwachungssystems auch die Steuereinrichtung. Hierdurch kann in dem erfindungsgemäßen System lediglich ein einzelner Prozessor vorhanden sein, der sowohl die Erkennungssignale als auch die von dem Überwachungssystem zur Verfügung gestellten Daten auswertet. Hierdurch können die Kosten des Systems reduziert werden.

Die Erkennungseinheit bzw. das Überwachungssystem kann auch als Brücke (d.h. als Gateway) dienen und eine Internet- und/oder Datenverbindung zwischen der Steuereinrichtung und dem Registrierungsserver herstellen. Eine eventuell ohnehin vorhandene Internetverbindung des Überwachungssystems kann dann besser ausgenutzt werden.

Im Folgenden werden mögliche Ausführungsformen des Überwachungssystems näher erläutert.

Das Überwachungssystem umfasst bevorzugt zumindest eine Straßenbeleuchtungseinrichtung, ein an oder in der Straßenbeleuchtungseinrichtung montiertes Kamerasystem, eine Erkennungseinheit, eine Sendeeinheit und bevorzugt ein mobiles Anzeigegerät, wobei das Kamerasystem zum Liefern von Abbildindizien von innerhalb der Parkplatzfläche liegenden Parkplatzbereichen ausgebildet ist und wobei die Erkennungseinheit insbesondere ausgebildet ist, um
- die geografischen Koordinaten von sich im Sichtbereich des Kamerasystems befindlichen Parkplatzbereichen abzuspeichern,
- in Abhängigkeit von den Abbildindizien den Parkplatzbereichen je einen Belegungsstatus zuzuordnen, der kennzeichnet, ob ein jeweiliger Parkplatzbereich frei oder besetzt ist,
- den jeweiligen Belegungsstatus zumindest der freien Parkplatzbereiche mit den zugehörigen geografischen Koordinaten der Sendeeinheit zur Verfügung zu stellen,
wobei die Sendeeinheit bevorzugt dazu ausgebildet ist, den jeweiligen Belegungsstatus zumindest der freien Parkplatzbereiche mit den zugehörigen geografischen Koordinaten an das mobile Anzeigegerät zu senden.

Alternativ kann die Sendeeinheit den jeweiligen Belegungsstatus zumindest der freien Parkplatzbereiche mit den zugehörigen geografischen Koordinaten auch an den Registrierungsserver und/oder den Parkplatzserver übermitteln. Der Registrierungsserver kann dann verifizieren, ob sämtliche als parkend erkannten Fahrzeuge auch einen Transponder mitführen.

Das Überwachungssystem kann zumindest eine der Funkeinrichtungen umfassen und so zur Ortung des Transponders beitragen. Zudem kann der Belegungsstatus mit den Daten verglichen werden, die aufgrund der Positionsbestimmung mittels des Transponders vorhanden sind, wodurch Parkvorgänge verifiziert werden können.

Das Überwachungssystems kann mittels des Kamerasystems die Parkplatzfläche optisch überwachen, wobei innerhalb der von dem Kamerasystem überwachten Parkplatzfläche freie Parkplatzbereiche dynamisch ermittelt und angezeigt werden können. Um das Überwachungssystem zu realisieren, können zumindest ein Kamerasystem, zumindest eine Erkennungseinheit, zumindest eine Sendeeinheit und/oder zumindest ein Anzeigegerät zusammenwirken. Das Anzeigegerät kann dasjenige mobile Anzeigegerät sein, das mit dem Registrierungsserver kommuniziert, um eine mittels der Transponder festgestellte Auslastung der Parkplatzbereiche anzuzeigen. Das Kamerasystem kann dabei an oder in einer Straßenbeleuchtungseinrichtung montiert sein, wodurch auf vorteilhafte Weise erreicht wird, dass für die Montage keine Erlaubnis von privaten Gebäudebesitzern eingeholt werden muss. Zudem kann bei Bedarf die Energiequelle der Straßenbeleuchtungseinrichtung die Energieversorgung des Kamerasystems und damit verbundener Komponenten ermöglichen, alternativ ist aber auch ein Akku- oder Batteriebetrieb möglich.

Das Kamerasystem kann so montiert und ausgerichtet sein, dass es bevorzugt jeweils mehrere Parkplatzbereiche einer Parkplatzfläche erfassen kann. Die vom Kamerasystem an die Erkennungseinheit gelieferten Abbildindizien der Parkplatzbereiche können beispielsweise Bildaufnahmen der kompletten Parkplatzbereiche oder aber auch nur Bilder von Teilbereichen der Parkplatzbereiche sein. Die Abbildindizien müssen lediglich einen Parkplatzbereich in solch einer Weise repräsentieren, dass die Erkennungseinheit anhand der Abbildindizien den Parkplatzbereichen einen Belegungsstatus zuordnen kann, der kennzeichnet, ob ein jeweiliger Parkplatzbereich frei oder besetzt ist. Der durch die Erkennungseinheit ermittelte Belegungsstatus eines Parkplatzbereiches wird dann seinen jeweiligen geografischen Koordinaten zugeordnet, die in der Erkennungseinheit abgespeichert sind. Daraufhin werden diese geografischen Koordinaten gemeinsam mit dem zugehörigen Belegungsstatus der Sendeeinheit übermittelt, die diese Daten dann an das Anzeigegerät und/oder den Registrierungsserver und/oder den Parkplatzserver sendet, wobei das Anzeigegerät optisch oder akustisch veranschaulicht, an welchen geografischen Orten sich freie Parkplatzbereiche befinden.

Als Anzeigegerät kann bevorzugt ein internetfähiges, mobiles oder stationäres Endgerät zum Einsatz gelangen, das insbesondere identisch mit dem vorgenannten mobilen Anzeigegerät ist. Besonders bevorzugt ist es, wenn das Anzeigegerät als internetfähiges Mobiltelefon ("Smartphone") oder als internetfähiger Fahrzeugcomputer ausgestaltet ist. Ebenso kann aber auch ein stationärer Computer oder eine Anzeigetafel zum Einsatz gelangen.

Die Sendeeinheit kann die genannten Daten an eine Vielzahl von Anzeigegeräten unterschiedlicher Nutzer liefern, denen jeweils veranschaulicht werden kann, an welchen Orten sie freie Parkplatzbereiche finden können.

Mittels des Überwachungssystems kann folglich eine Vielzahl von beispielsweise öffentlichen Parkplatzbereichen gemeinsam mit ihrem jeweiligen Belegungsstatus erfasst werden, wobei auf Basis der erfassten Daten einer großen Anzahl von Nutzern mitgeteilt werden kann, wo sich zu einem aktuellen Zeitpunkt gerade freie Parkplatzbereiche befinden, die dann gezielt und auf dem kürzesten Weg angefahren werden können.

Die zum Einsatz gelangende Erkennungseinheit kann sich vollständig im Gehäuse des Kamerasystems befinden, es können aber auch nur Teile der Erkennungseinheit im Gehäuse des Kamerasystems untergebracht sein. In letztgenanntem Fall befinden sich die restlichen Teile der Erkennungseinheit in der Regel im Bereich der Sendeeinheit, insbesondere innerhalb eines Servers, der auch die Sendeeinheit beinhaltet. Der Server kann identisch zu dem Registrierungsserver sein, wodurch das Überwachungssystem und die Steuereinrichtung auf den gleichen Server zugreifen können. Die Sendeeinheit kann räumlich beabstandet von der Straßenbeleuchtungseinrichtung beispielsweise in einem Serverraum untergebracht sein, wobei der Server bevorzugt drahtlos Belegungsstatusinformationen oder Abbildindizien bzw. Daten von mehreren Kamerasystem und/oder Erkennungseinheiten zur Verfügung gestellt bekommt.

Besonders bevorzugt ist es, wenn ein Großteil der Auswertung der Abbildindizien innerhalb der im Gehäuse des Kamerasystems untergebrachten Erkennungseinheit erfolgt, da dann nur die aus der Auswertung resultierenden Daten an die Sendeeinheit bzw. den Server übertragen werden müssen. Der Umfang dieser Daten ist deutlich geringer als die vom Kamerasystem gelieferten Daten bzw. Abbildindizien, so dass für die Übertragung dieser Daten von der Erkennungseinheit an den Server bzw. an die Sendeeinheit nur eine geringe Bandbreite benötigt wird. Zudem werden dann im Server nur Auswertungsdaten gespeichert oder verarbeitet, die unter Datenschutzaspekten unkritisch sind, da solche Auswertungsdaten im Unterschied zu den Abbildindizien beispielsweise keine Kfz-Kennzeichen umfassen.

Wenn beispielsweise entlang einer langen Straße Kamerasysteme an unterschiedlichen Straßenbeleuchtungseinrichtungen montiert sind, ist es nicht nötig, dass jedem Kamerasystem eine eigene Erkennungseinheit zugeordnet ist, die jeweils mit der Sendeeinheit bzw. einem Server kommuniziert. Vielmehr ist es in diesem Fall sinnvoll, dass nur eine oder wenige der Erkennungseinheiten die genannte Kommunikation übernehmen, wohingegen die anderen Erkennungseinheiten ihre Daten mit einem schmalbandigen Übertragungssystem an die eine oder wenige Erkennungseinheiten übertragen, die dann mit der Sendeeinheit bzw. dem Server kommunizieren.

Alternativ findet die Auswertung der Abbildindizien ausschließlich innerhalb eines Gehäuses des Kamerasystems und insbesondere ausschließlich in der Erkennungseinheit statt. Dies bedeutet, dass außer dem Belegungsstatus, der z.B. die Koordinaten von freien und besetzten Parkplatzbereichen angibt, keine weiteren Daten das Gehäuse des Kamerasystems verlassen müssen. Hierfür können das Kamerasystem und die Erkennungseinheit in einem gemeinsamen Gehäuse angeordnet sein, wobei insbesondere das Gehäuse des Kamerasystems das gemeinsame Gehäuse bildet. Die von dem Kamerasystem aufgenommenen Bilder bzw. die Abbildindizien können somit innerhalb des Gehäuses verarbeitet und anschließend verworfen werden. Auch strenge Datenschutzvorgaben, die den öffentlichen Raum betreffen, können auf diese Weise erfüllt werden, da keine Bilddaten, Personeninformationen und dergleichen gespeichert oder ausgegeben werden.

Bevorzugt umfassen die Abbildindizien ausschließlich Einzelbilder, d.h. Standbilder. Dies bedeutet, die Auswertung in der Erkennungseinheit kann nur auf Einzelbildern basieren. Dabei kann der jeweilige Belegungsstatus alleine anhand nur eines Einzelbildes ermittelt werden. Alternativ oder zusätzlich können auch Unterschiede zwischen zwei Einzelbildern desselben Ausschnitts der Parkplatzfläche (d.h. Unterschiede zwischen zwei Abbildindizien) zur Ermittlung des Belegungsstatus herangezogen werden.

Insbesondere können nacheinander jeweils Einzelbilder verschiedener Bereiche der Parkplatzfläche erfasst werden. Bei der Verwendung eines schwenkbaren Kamerasystems kann das Kamerasystem nach der Aufnahme eines Einzelbildes geschwenkt werden und einen anderen Bereich der Parkplatzfläche erfassen. Werden mehrere Kameras verwendet, können die Kameras nacheinander jeweils ein Einzelbild aufnehmen und an die Erkennungseinheit übermitteln.

Weiter bevorzugt ist die Erkennungseinheit ausgebildet, einen Belegungsstatus unabhängig von vorgegebenen, beispielsweise durch Bodenlinien definierten, Parkplatzbereichen zu ermitteln. Dies bedeutet, dass auf einer Parkplatzfläche auch Parkplatzbereiche als frei erkannt werden können, wenn die Parkplatzbereiche nicht durch Linien, Rechtecke und dergleichen als solche gekennzeichnet sind. Die Erkennung von freien Parkplatzbereichen kann somit im gesamten Sichtbereich des Kamerasystems durchgeführt werden, unabhängig davon ob die Parkplatzbereiche als solche markiert sind, oder nicht.

Die Erkennungseinheit kann ferner ausgebildet sein, die Größe eines jeweils als frei erkannten Parkplatzbereichs zu ermitteln und zusammen mit dem Belegungsstatus auszugeben. Anhand der Größe kann ein freier Parkplatzbereich einem in seinen Abmessungen passenden Fahrzeug zugeteilt werden, wodurch die Anzahl der auf einer Parkplatzfläche abstellbaren Fahrzeuge erhöht werden kann.

Gemäß einer vorteilhaften Ausführungsform ist das Kamerasystem eingerichtet, eine Belichtungszeit in einem im Wesentlichen unbegrenzten Zeitbereich in Abhängigkeit der Helligkeit im Sichtbereich des Kamerasystems einzustellen. Aufgrund der über einen weiten Zeitbereich einstellbaren Belichtungszeit wird es ermöglicht, auch bei Dunkelheit auswertbare Abbildindizien zu erzeugen, ohne auf eine zusätzliche Beleuchtung (z.B. eine Infrarotbeleuchtung) angewiesen zu sein. Die Belichtungszeit kann bevorzugt anhand der Helligkeit in einem Teilbereich des Sichtbereichs eingestellt werden. Beispielsweise können im Sichtbereich zwei quadratische Teilbereiche vorgegeben sein, innerhalb derer die Helligkeit bestimmt wird.

Die Möglichkeit im Wesentlichen beliebige Belichtungszeiten zu verwenden ergibt sich aus der Aufnahme von Einzelbildern, für die die jeweilige Belichtungszeit frei gewählt werden kann. Hierdurch entsteht ein Vorteil gegenüber Video-basierten Überwachungssystemen, bei welchen die maximale Belichtungszeit von der Bildrate abhängt und nicht beliebig groß eingestellt werden kann.

Wegen der längeren Belichtungszeit bei Dunkelheit kann die Anzahl der aufgenommenen Abbildindizien pro Zeiteinheit zurückgehen. Allerdings verändert sich der Belegungszustand von Parkplatzbereichen nicht in sehr kurzen Zeitabständen, sodass auch sehr lange Belichtungszeiten von mehreren Sekunden für eine ausreichend genaue Überwachung der Parkplatzbereiche genügen. Bevorzugt kann eine maximale Belichtungszeit von einer oder zwei Sekunden vorgegeben werden.

Die Erkennungseinheit kann dazu ausgebildet sein, Bewegungen des Kamerasystems, welche durch Bewegungen der Straßenbeleuchtungseinrichtung relativ zur Parkplatzfläche bedingt sind, in den vom Kamerasystem gelieferten Abbildindizien mittels eines Bildverarbeitungsverfahrens derart zu kompensieren, dass die Abbildindizien durch die Bewegungen des Kamerasystems nicht verfälscht sind. Somit können Bewegungen der Straßenbeleuchtungseinrichtung, die beispielsweise durch Wind bedingt sind, durch eine elektronische Bildstabilisierung kompensiert werden. Zu diesem Zweck können möglichst in der Bildmitte Referenzpunkte, wie z.B. Ampeln, Markierungen an Häusern oder Straßenschilder, festgelegt werden, welche eine unveränderliche Position relativ zu den erfassten Parkplatzbereichen besitzen. Bevorzugt kann eine Markierung an einem Trägerelement ("Leuchtenmast") der Straßenbeleuchtungseinrichtung angebracht sein, insbesondere in einem bodennahen Bereich des Trägerelements. Dies hat den Vorteil, dass die Markierung auch z.B. bei starkem Wind ihre Position kaum verändert und üblicherweise von dem Kamerasystem gut erfasst werden kann. Die Abbildindizien der Parkplatzbereiche können dann unabhängig von ihrer absoluten Position innerhalb des Bildes lediglich in Abhängigkeit ihrer Position relativ zu den Referenzpunkten bzw. zu der Markierung verarbeitet werden, wodurch sich die genannten Bewegungen der Straßenbeleuchtungseinrichtungen bei der Verarbeitung eliminieren lassen.

Zusätzlich kann auch eine Zusatzmarkierung an dem Trägerelement angebracht sein, die zu der Markierung beabstandet angeordnet ist. Aufgrund einer Verschiebung der Relativpositionen von Markierung und Zusatzmarkierung kann beispielsweise eine Verwindung des Trägerelements ermittelt werden. Hierdurch können Positionsveränderungen des Kamerasystems noch genauer bestimmt werden. Alternativ oder zusätzlich können die Erkennungseinheit und/oder das Kamerasystem zumindest einen Beschleunigungssensor und/oder ein Gyroskop zur Erfassung von Bewegungen der Straßenbeleuchtungseinrichtung und des an ihr montierten Kamerasystems aufweisen. Mittels derartiger Komponenten lässt sich eine Rotation des Kamerasystems ebenso erfassen, wie Bewegungen entlang dreier orthogonaler Achsen. Aufgrund der von Beschleunigungssensor bzw. Gyroskop gelieferten Messdaten können die Abbildindizien des Kamerasystems wiederum so verarbeitet werden, dass sie durch Bewegungen der Straßenbeleuchtungseinrichtung nicht verfälscht werden.

Es existieren somit letztlich zwei unterschiedliche Methoden, Bewegungen der Straßenbeleuchtungseinrichtung zu kompensieren, wobei diese beiden Methoden alternativ oder kombiniert angewendet werden können. In der Regel wird die Kompensation mittels eines Bildverarbeitungsverfahrens dann eingesetzt, wenn gute und brauchbare Referenzpunkte zur Verfügung stehen. Sollte dies nicht der Fall sein, können Beschleunigungssensor bzw. Gyroskop eingesetzt werden.

Besonders vorteilhaft ist es, wenn das Kamerasystem einen elektrisch ansteuerbaren Schwenk-Neigekopf zur Bewegung zumindest einer Kameraoptik relativ zur Parkplatzfläche und/oder ein Zoomobjektiv aufweist. Durch die Bewegung des Schwenk-Neigekopfs und/oder durch Einstellung des Zoomobjektivs kann die gesamte, einem Kamerasystem zugeordnete Parkplatzfläche mit hoher Auflösung erfasst werden. Es wird auf diese Weise ein periodisches, exaktes Abfahren der kompletten Parkplatzfläche möglich, wobei im Rahmen eines Initialisierungsprozesses eine Reihe von Positionen des Schwenk-Neigekopfs mit zugehörigen Zoomeinstellungen festgelegt werden kann. Diese Positionen werden dann jeweils durch eine schnelle Bewegung des Schwenk-Neigekopfs und durch eine parallel erfolgende Zoomeinstellung angefahren, woraufhin ein Bild aufgenommen wird, so dass danach die nächste Position angefahren werden kann. Bereits während der Verstellung des Schwenk-Neigekopfs zwischen zwei Positionen können zuvor aufgenommene Bilder bzw. Abbildindizien von der Erkennungseinheit verarbeitet werden.

Besonders vorteilhaft ist die Tatsache, dass bei Einsatz eines Schwenk-Neigekopfs die Initialisierung und somit die jeweils erforderliche Ausrichtung des Kamerasystems nach dessen Montage an der Straßenbeleuchtungseinrichtung elektronisch und remote von geschultem Fachpersonal vorgenommen werden kann, da während der Montage selbst noch keinerlei Justierung nötig ist.

Alternativ oder zusätzlich zum Einsatz eines Schwenk-Neigekopfs kann das an der Straßenbeleuchtungseinrichtung angebrachte Kamerasystem auch eine Mehrzahl von relativ zueinander stationären, unterschiedlich zueinander orientierten Kameras aufweisen. Diese einzelnen Kameras decken dann die dem jeweiligen Kamerasystem zugeordnete Parkplatzfläche nahtlos und vollständig ab, insbesondere ohne dass hierfür eine Bewegung dieser Kameras nötig ist.

Sowohl durch den Einsatz eines Kamerasystems mit mehreren Kameras als auch durch den Einsatz eines Schwenk-Neigekopfs mit verstellbarem Zoomobjektiv lässt sich erreichen, dass Verzerrungen durch Weitwinkelobjektive weitgehend vermieden werden. In jedem Fall ist es sinnvoll, einen maximalen Kamerablickwinkel zur Aufnahme der Abbildindizien so zu wählen, dass keine Bildverzerrungen auftreten, alternativ ist es jedoch auch möglich, beim Auftreten von Verzerrungen eine rechnergestützte Entzerrung durchzuführen.

Gemäß einer bevorzugten Ausführungsform umfasst das Kamerasystem zumindest zwei feststehende unterschiedlich orientierte Kameras, deren Sichtbereiche sich zumindest bereichsweise überlappen. In dem sich überlappenden Sichtbereich kann bevorzugt die Markierung und/oder die Zusatzmarkierung bzw. der Referenzpunkt zur Kompensation von Bewegungen des Kamerasystems angeordnet sein. Vorteilhafterweise wertet die Erkennungseinheit zu einem Zeitpunkt oder während eines Zeitintervalls jeweils nur die Abbildindizien genau einer Kamera aus. Die jeweils andere Kamera oder die anderen Kameras kann/können zu dem Zeitpunkt bzw. während des Zeitintervalls abgeschaltet werden. Hierbei ist von Vorteil, dass der Energieverbrauch des Überwachungssystems reduziert werden kann. Zudem ergibt sich die Möglichkeit lediglich genau einen Prozessor (bzw. Mikroprozessor) in der Erkennungseinheit vorzusehen, der alternierend mit einer der jeweiligen Kameras gekoppelt wird. Auf diese Weise können die Materialkosten des Überwachungssystems reduziert werden.

Besonders vorteilhaft ist es, wenn das Kamerasystem an einer Auskragung der Straßenbeleuchtungseinrichtung befestigt ist. An einer solchen Auskragung sind in der Regel auch die Beleuchtungsmittel der Straßenbeleuchtungseinrichtung angeordnet, so dass man mit hoher Wahrscheinlichkeit davon ausgehen kann, dass sich zwischen der Auskragung und der zu beleuchtenden bzw. vom Kamerasystem zu erfassenden Fläche keine Gegenstände, wie beispielsweise Bäume, befinden. Insofern wird durch die Befestigung des Kamerasystems an der Auskragung erreicht, dass das Sichtfeld des Kamerasystems mit hoher Wahrscheinlichkeit nicht durch störende Gegenstände beschränkt ist.

Diese Wahrscheinlichkeit lässt sich zusätzlich erhöhen, wenn das Kamerasystem benachbart zu einem Beleuchtungsmodul der Straßenbeleuchtungseinrichtung derart angeordnet ist, dass der Abstand zwischen Kamerasystem und dem Trägerelement, beispielsweise dem Leuchtenmast, größer ist als der Abstand zwischen dem Beleuchtungsmodul und dem Trägerelement. Das Kamerasystem befindet sich dann möglichst weit weg vom Trägerelement und somit auch im maximalen Abstand zu Bäumen, die im Bereich des Trägerelements vorhanden sein können.

Es kann sich bei der Straßenbeleuchtungseinrichtung um ein lampentragendes Seilsystem handeln, welches beispielsweise zwischen mehreren Gebäuden installiert ist. Eine Seilverankerung kann Bestandteil der Straßenbeleuchtungseinrichtung sein, wobei das Kamerasystem an der Seilverankerung angebracht sein kann.

Die Erkennungseinheit kann dazu ausgebildet sein, die Helligkeit von Beleuchtungsmodulen der Straßenbeleuchtungseinrichtung in Abhängigkeit von aus den Abbildindizien ermittelten Parametern, insbesondere in Abhängigkeit von Helligkeitswerten und/oder detektierten Bewegungen zu steuern bzw. anzuschalten, abzuschalten oder zu dimmen. Dieser unter Energieeinsparungsaspekten interessanten Variante liegt die Erkenntnis zugrunde, dass eine vergleichsweise starke Beleuchtung der Parkplatzfläche nur dann nötig ist, wenn es dunkel ist und zugleich eine Bewegung von Fußgängern bzw. Autos detektiert wird. In anderen Fällen genügt eine abgedunkelte Beleuchtung, welche allerdings ausreichen muss, um die Parkplatzbereiche mittels des Kamerasystems mit ausreichender Auflösung zu erkennen. Beispielsweise kann bei Schnee auf der Parkplatzfläche die Beleuchtung gedimmt werden, wohingegen bei Laub auf der Parkplatzfläche die Beleuchtung verstärkt wird. Zudem wird es durch die genannte Variante möglich, die Beleuchtungsmodule zu dimmen, wenn die Parkplatzfläche bereits durch Autoscheinwerfer beleuchtet wird.

Besonders bevorzugt ist es, wenn die Erkennungseinheit dazu ausgebildet ist, die Helligkeit von Beleuchtungsmodulen der ihr zugeordneten und weiteren Straßenbeleuchtungseinrichtungen in Abhängigkeit von aus den Abbildindizien ermittelten Parametern, insbesondere in Abhängigkeit von Helligkeitswerten und/oder detektierten Bewegungen zu steuern. In diesem Fall können dann auch Straßenbeleuchtungseinrichtungen, die benachbart zum Überwachungssystem vorhanden sind und kein Überwachungssystem aufweisen, entsprechend angeschaltet, abgeschaltet oder gedimmt werden. Auf diese Weise lässt sich die Montage eines

Überwachungssystems an jeder Straßenbeleuchtungseinrichtung vermeiden, vielmehr genügt es, wenn das Überwachungssystem lediglich an einigen Straßenbeleuchtungseinrichtungen vorhanden ist, die dann die anderen Straßenbeleuchtungseinrichtungen ebenfalls mit ansteuern.

Nachfolgend wird die Erfindung rein beispielhaft unter Bezugnahme auf die Zeichnung beschrieben. Es zeigt:

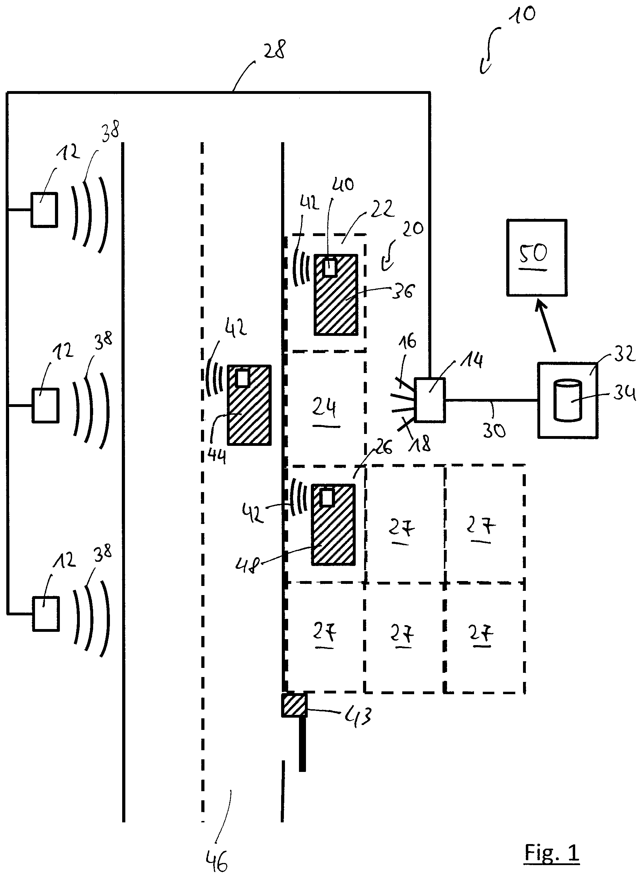

- Fig. 1: eine schematische Ansicht eines Systems zur Erfassung von geparkten Fahrzeugen.

Fig. 1 zeigt schematisch eine Ansicht eines Systems 10 zur Erfassung von geparkten Fahrzeugen. Das System 10 umfasst drei zueinander beabstandet angeordnete Funkeinrichtungen 12 sowie ein Überwachungssystem, von welchem eine Kameraeinheit 14 dargestellt ist. Die Kameraeinheit 14 umfasst eine erste Kamera 16 und eine zweite Kamera 18, deren Sichtbereiche sich zumindest bereichsweise überlappen.

Die Kameraeinheit 14 sowie die Funkeinrichtungen 12 überwachen eine Parkplatzfläche 20, auf der sich ein erster Parkplatzbereich 22, ein zweiter Parkplatzbereich 24 und ein dritter Parkplatzbereich 26 befinden. Zudem sind auf der Parkplatzfläche 20 fünf weitere Parkplatzbereiche 27 vorgesehen.

Die nachfolgende Erläuterung bezieht sich lediglich beispielhaft auf die drei Parkplatzbereiche 22, 24, 26, wobei das System 10 in der Lage ist, längere Straßenzüge oder große Flächen mit mehreren hundert Parkplatzbereichen zu überwachen.

Der erste Parkplatzbereich 22 und der zweite Parkplatzbereich 24 sind allgemein zugängliche Parkplatzbereiche. Der dritte Parkplatzbereich 26 hingegen ist ausschließlich für Menschen mit Behinderung freigegeben. Die weiteren Parkplatzbereiche 27 können für Fahrer von Elektroautos reserviert sein.

Die Funkeinrichtungen 12 sind mittels einer ersten Datenverbindung 28 mit der Kameraeinheit 14 gekoppelt, wobei in der Kameraeinheit 14 eine Steuereinrichtung und eine Erkennungseinheit (beide nicht gezeigt) vorgesehen sind. Die Kameraeinheit 14 wiederum ist mittels einer zweiten Datenverbindung 30 mit einem Registrierungsserver 32 gekoppelt. Der Registrierungsserver 32 umfasst eine Datenbank 34.

Nähert sich im Betrieb des Systems 10 ein erstes Fahrzeug 36 der Parkplatzfläche 20, so werden mit den Funkeinrichtungen 12 wiederholt Anfragesignale 38 ausgesendet, die von einem Transponder 40 im ersten Fahrzeug 36 mit einem Erkennungssignal 42 beantwortet werden. Anhand der Laufzeit bis zum Empfang des Erkennungssignals 42 wird mittels Triangulation auf die Position des Transponders 40 geschlossen.

Die Zufahrt zu der Parkplatzfläche 20 wird durch eine Schrankenanlage 43 beschränkt. Wird anhand des Transponders 40 erkannt, dass sich das erste Fahrzeug 36 in der Nähe der Schrankenanlage 43 befindet, wird die Schrankenanlage 43 geöffnet, um die Zufahrt zu der Parkplatzfläche 43 zu gestatten. Die Schrankenanlage 43 wird dabei geöffnet, da das erste Fahrzeug 36 über einen Transponder 40 verfügt. Ist in einem Fahrzeug kein Transponder 40 vorhanden, wird von der Schrankenanlage 43 ein Transponder 40 an den Fahrer des Fahrzeugs ausgegeben.

Wie in Fig. 1 ersichtlich ist, steht das erste Fahrzeug 36 nach der Einfahrt durch die Schrankenanlage 43 auf dem ersten Parkplatzbereich 22. Die Position des ersten Fahrzeugs 36 wird wiederholt, beispielsweise jede Sekunde, durch erneutes Aussenden der Anfragesignale 38 und den erneuten Empfang des Erkennungssignals 42 bestimmt, so dass festgestellt werden kann, dass das erste Fahrzeug 36 dauerhaft auf dem ersten Parkplatzbereich 22 steht.

Zugleich wird mittels der Kameraeinheit 14 festgestellt, dass sich das erste Fahrzeug 36 (bzw. zumindest irgendein Fahrzeug) auf dem ersten Parkplatzbereich 22 befindet, wodurch die Ortung des ersten Fahrzeugs 36 mittels der Funkeinrichtungen 12 bestätigt wird.

Wird erkannt, dass das erste Fahrzeug 36 länger als zwei Minuten auf dem ersten Parkplatzbereich 22 verweilt, so wird über die zweite Datenverbindung 30 eine Identifikation des Transponders 40 bzw. des ersten Fahrzeugs 36 an den Registrierungsserver 32 übermittelt. Der Registrierungsserver 32 überprüft in seiner Datenbank 34, welchem Fahrzeughalter das erste Fahrzeug 36 zugeordnet ist und ob der Fahrzeughalter eine Berechtigung zum Parken auf dem ersten Parkplatzbereich 22 besitzt. Verfügt der Fahrzeughalter über eine entsprechende Berechtigung wird dies dem Transponder 40 über ein Funksignal mitgeteilt. Der Transponder 40 zeigt die Berechtigung anschließend mittels einer grünen Signalleuchte an.

Nachdem dem Registrierungsserver 32 später mitgeteilt wurde, dass das erste Fahrzeug 36 den ersten Parkplatzbereich 22 wieder verlassen hat, wird anhand der Parkdauer die Parkgebühr für das erste Fahrzeug 36 ermittelt und dem Fahrzeughalter abgebucht.

Ein zweites Fahrzeug 44 ist in zweiter Reihe auf einer Straße 46 geparkt. Das zweite Fahrzeug 44 wird auf die oben beschriebene Art anhand seines Transponders 40 geortet, wobei festgestellt wird, dass das zweite Fahrzeug 44 auf der Straße 46 parkt. Von der Steuereinrichtung in der Kameraeinheit 14 wird daraufhin ein Hinweissignal ausgegeben, welches Parküberwachungspersonal oder die Polizei von dem Parken auf der Straße 46 informiert.

Ein drittes Fahrzeug 48 wird ebenfalls als geparkt registriert, wobei das dritte Fahrzeug 48 auf dem für behinderte Menschen reservierten dritten Parkplatzbereich 26 parkt. Für das dritte Fahrzeug 48 wird in dem Registrierungsserver 32 überprüft, ob das dritte Fahrzeug 48 in der Datenbank als ein Fahrzeug für einen behinderten Menschen ausgewiesen ist und damit über eine entsprechende Berechtigung verfügt. Ist dies nicht der Fall, kann von dem Registrierungsserver 32 eine entsprechende Benachrichtigung an Parküberwachungspersonal gesendet werden.

Der Registrierungsserver 32 kommuniziert mit einem Parkplatzserver 50. Von dem Registrierungsserver 32 wird an den Parkplatzserver 50 ein Statussignal übertragen, welches angibt, welche Parkplatzbereiche 22, 24, 26, 27 belegt sind und ob die Parkplatzbereiche 22, 24, 26, 27 jeweils von Fahrzeugen 36, 44, 48 benutzt werden, die eine passende Berechtigung aufweisen. Der Parkplatzserver 50 stellt eine Webseite (nicht gezeigt) bereit, auf welcher freie und belegte Parkplatzbereiche 22, 24, 26, 27 dargestellt werden.

Es versteht sich, dass die Transponder 40 der verschiedenen Fahrzeuge 36, 44, 48 zwar gleichartige Erkennungssignale 42 aussenden, die Erkennungssignale 42 aber unterschiedliche Informationen enthalten, wobei z.B. für jedes Fahrzeug 36, 44, 48 eine andere Identifikationsnummer übertragen werden kann.

### Bezuqszeichenliste

- 10: System
- 12: Funkeinrichtung
- 14: Kameraeinheit
- 16: erste Kamera
- 18: zweite Kamera
- 20: Parkplatzfläche
- 22: erster Parkplatzbereich
- 24: zweiter Parkplatzbereich
- 26: dritter Parkplatzbereich
- 27: weiterer Parkplatzbereich
- 28: erste Datenverbindung
- 30: zweite Datenverbindung
- 32: Registrierungsserver
- 34: Datenbank
- 36: erstes Fahrzeug
- 38: Anfragesignal
- 40: Transponder
- 42: Erkennungssignal
- 43: Schrankenanlage
- 44: zweites Fahrzeug
- 46: Straße
- 48: drittes Fahrzeug
- 50: Parkplatzserver

## Patentansprüche

1. Verfahren zur Erfassung von geparkten Fahrzeugen (36, 44, 48), wobei
- Parkplatzbereiche (22, 24, 26, 27) in einer Parkplatzfläche (20) erkannt und/oder festgelegt werden,
- in oder an einem Fahrzeug (36, 44, 48) ein Transponder (40) angeordnet wird,
- der Transponder (40) automatisch wiederholt ein Erkennungssignal (42) aussendet,
- das Erkennungssignal (42) von zumindest einer Funkeinrichtung (12) empfangen wird,
- mittels einer Steuereinrichtung anhand des Erkennungssignals (42) eine Position des Fahrzeugs (36, 44, 48) berechnet und eine Identifikation des Transponders (40) ermittelt wird,
- festgestellt wird, ob sich das Fahrzeug (36, 44, 48) in einem der Parkplatzbereiche (22, 24, 26, 27) befindet,
- anhand des Erkennungssignals (42) ermittelt wird, ob das Fahrzeug (36, 44, 48) parkt,
- sofern das Fahrzeug (36, 44, 48) auf einem der Parkplatzbereiche (22, 24, 26, 27) parkt,
- die Identifikation des Transponders (40) und der von dem Fahrzeug (36, 44, 48) verwendete Parkplatzbereich (22, 24, 26, 27) an einen Registrierungsserver (32) übermittelt wird,
- der Registrierungsserver (32) anhand der Identifikation des Transponders (40) ein Statussignal für den verwendeten Parkplatzbereich (22, 24, 26, 27) ausgibt,
**dadurch gekennzeichnet, dass** der Transponder (40) ausgebildet ist, eine Bewegung des Fahrzeugs (36, 44, 48) zu erkennen, wobei eine Häufigkeit des Aussendens von Erkennungssignalen (42) nach einem vorbestimmten Zeitraum ohne eine Bewegung des Fahrzeugs (36, 44, 48) reduziert wird.

2. Verfahren nach Anspruch 1,
**dadurch gekennzeichnet, dass**
der Registrierungsserver (32) anhand der Identifikation des Transponders (40) einen Berechtigungsstatus für den verwendeten Parkplatzbereich (22, 24, 26, 27) ermittelt, wobei der Berechtigungsstatus in dem Statussignal enthalten ist, und/oder dass
Statussignale betreffend mehrere Parkplatzbereiche (22, 24, 26, 27) an einen Parkplatzserver (50) und/oder ein mobiles Anzeigegerät übermittelt werden, wobei der Parkplatzserver (50) und/oder das mobile Anzeigegerät eine Übersicht über freie und belegte Parkplatzbereiche (22, 24, 26, 27) anhand der Statussignale anzeigen.

3. Verfahren nach zumindest einem der vorstehenden Ansprüche,
**dadurch gekennzeichnet, dass**
an einer Zufahrt zu der Parkplatzfläche (20) ein Transponder (40) an Fahrzeuge ohne Transponder (40) ausgegeben wird.

4. Verfahren nach zumindest einem der vorstehenden Ansprüche,
**dadurch gekennzeichnet, dass**
eine Zufahrtsbeschränkung (43) der Parkplatzfläche (20) erst dann aufgehoben wird, wenn erkannt wird, dass das Fahrzeug (36, 44, 48) über einen Transponder (40) verfügt und eine Berechtigung zum Parken auf zumindest einem Parkplatzbereich (22, 24, 26, 27) der Parkplatzfläche (20) aufweist.

5. Verfahren nach zumindest einem der vorstehenden Ansprüche,
**dadurch gekennzeichnet , dass**
der Identifikation des Transponders (40) von dem Registrierungsserver (32) ein Fahrzeughalter und/oder ein Fahrzeugkennzeichen zugeordnet und anhand von persönlichen Daten des Fahrzeughalters und/oder des Fahrzeugkennzeichens der Berechtigungsstatus ermittelt wird, wobei
der Berechtigungsstatus bevorzugt auch anhand der Uhrzeit, des Wochentags und/oder der Lage des verwendeten Parkplatzbereichs (22, 24, 26, 27) ermittelt wird.

6. Verfahren nach zumindest einem der vorstehenden Ansprüche,
**dadurch gekennzeichnet, dass**
der Transponder (40) das Erkennungssignal (42) verschlüsselt aussendet, wobei das Erkennungssignal (42) insbesondere mittels eines asymmetrischen Verschlüsselungsverfahrens erzeugt wird.

7. Verfahren nach zumindest einem der vorstehenden Ansprüche,
**dadurch gekennzeichnet, dass**
der Transponder (40) einen Status anzeigt, insbesondere mittels eines Lichtsignals, wobei angezeigt wird, ob eine Berechtigung zum Parken auf dem jeweiligen Parkplatzbereich (22, 24, 26, 27) vorhanden ist.

8. Verfahren nach zumindest einem der vorstehenden Ansprüche,
**dadurch gekennzeichnet, dass**
ein Hinweissignal ausgegeben wird, sofern ein Fahrzeug (36, 44, 48) außerhalb der Parkplatzbereiche (22, 24, 26, 27) parkt.

9. Verfahren nach zumindest einem der vorstehenden Ansprüche,
**dadurch gekennzeichnet , dass**
mittels eines Überwachungssystems (14) die Parkplatzfläche (20) zumindest bereichsweise, bevorzugt optisch, mittels Ultraschall, mittels Radar und/oder mittels Bodensensoren, erfasst wird, wobei mittels einer Erkennungseinheit freie und besetzte Parkplatzbereiche (22, 24, 26, 27), insbesondere mittels Bildverarbeitung, bevorzugt anhand von Einzelbildern, erkannt werden.

10. Verfahren nach Anspruch 9,
**dadurch gekennzeichnet, dass**
anhand des Überwachungssystems (14) überprüft wird, ob ein mittels des Erkennungssignals (42) als parkend identifiziertes Fahrzeug (36, 44, 48) tatsächlich auf dem ermittelten Parkplatzbereich (22, 24, 26, 27) parkt, wobei die Identifikation des Transponders (40) und der von dem Fahrzeug (36, 44, 48) verwendete Parkplatzbereich (22, 24, 26, 27) nur im Fall einer korrekten Ermittlung des parkenden Fahrzeugs (36, 44, 48) an den Registrierungsserver (32) übermittelt werden.

11. Verfahren nach Anspruch 9 oder 10,
**dadurch gekennzeichnet , dass**
ein Benachrichtigungssignal ausgegeben wird, sofern von dem Überwachungssystem (14) ein Fahrzeug (36, 44, 48) auf einem Parkplatzbereich (22, 24, 26, 27) detektiert wird, wobei die Position oder Anwesenheit des Fahrzeugs (36, 44, 48) nicht mittels eines Erkennungssignals (42) festgestellt wurde.

12. System (10), umfassend
zumindest einen Transponder (40),
zumindest eine Funkeinrichtung (12),
eine Steuereinrichtung und
einen Registrierungsserver (32), welcher mittels einer Datenverbindung (30) mit der Steuereinrichtung verbunden ist,
**dadurch gekennzeichnet, dass** das System (10) zur Durchführung des Verfahrens nach einem der vorstehenden Ansprüche ausgebildet ist.

13. System (10) nach Anspruch 12,
**dadurch gekennzeichnet, dass**
die Funkeinrichtung (12) in oder an Straßenleuchten, Fassaden, Straßenschildern und/oder Ampeln angebracht ist.

14. System (10) nach einem der Ansprüche 12 und 13,
**gekennzeichnet durch**
ein Überwachungssystem (14) zur optischen, zumindest bereichsweisen Erfassung der Parkplatzfläche (20), wobei das Überwachungssystem (14) ein Kamerasystem und eine Erkennungseinheit umfasst, die ausgebildet ist, freie und besetzte Parkplatzbereiche (22, 24, 26, 27), insbesondere mittels Bildverarbeitung, bevorzugt anhand von Einzelbildern, zu erkennen.

## Claims

1. A method of detecting parked vehicles (36, 44, 48), wherein
- parking bays (22, 24, 26, 27) are recognized and/or determined in a parking space zone (20);
- a transponder (40) is arranged in or at a vehicle (36, 44, 48);
- the transponder (40) automatically repeatedly transmits a recognition signal (42);
- the recognition signal (42) is received by at least one radio device (12);
- a position of the vehicle (36, 44, 48) is calculated and an identification of the transponder (40) is determined by means of a control device with reference to the recognition signal (42);
- a determination is made whether the vehicle (36, 44, 48) is located in one of the parking bays (22, 24, 26, 27);
- a determination is made with reference to the recognition signal (42) whether the vehicle (36, 44, 48) is parked;
- if the vehicle (36, 44, 48) is parked in one of the parking bays (22, 24, 26, 27),
- the identification of the transponder (40) and the parking bay (22, 24, 26, 27) used by the vehicle (36, 44, 48) is transmitted to a registration server (32); and
- the registration server (32) outputs a status signal for the parking bay (22, 24, 26) used with reference to the identification of the transponder (40),
**characterized in that**
the transponder (40) is configured to recognize a movement of the vehicle (36, 44, 48), with a frequency of occurrence of the transmission of recognition signals (42) being reduced after a predefined time period without a movement of the vehicle (36, 44, 48).

2. A method in accordance with claim 1,
**characterized in that**
the registration server (32) determines an authorization status for the parking bay (22, 24, 26, 27) used with reference to the identification of the transponder (40), with the authorization status being included in the status signal; and/or **in that**
status signals relating to a plurality of parking bays (22, 24, 26, 27) are transmitted to a car park server (50) and/or to a mobile display device, with the car park server (50) and/or the mobile display device displaying an overview of free and occupied parking bays (22, 24, 26, 27) with reference to the status signals.

3. A method in accordance with at least one of the preceding claims,
**characterized in that**
a transponder (40) is issued to vehicles without transponders (40) at an entrance to the parking space zone (20).

4. A method in accordance with at least one of the preceding claims,
**characterized in that**
an entrance restriction (43) of the parking space zone (20) is only removed when it has been recognized that the vehicle (36, 44, 48) has a transponder (40) and has an authorization to park in at least one parking bay (22, 24, 26, 27) of the parking space zone (20).

5. A method in accordance with at least one of the preceding claims,
**characterized in that**
a vehicle owner and/or a vehicle registration is/are associated with the identification of the transponder (40) by the registration server (32) and the authorization status is determined with reference to personal data of the vehicle owner and/or of the vehicle registration, with the authorization status preferably also being determined with reference to the time, to the day of the week and/or to the location of the parking bay (22, 24, 26, 27) used.

6. A method in accordance with at least one of the preceding claims,
**characterized in that**
the transponder (40) transmits the recognition signal (42) in encrypted form, with the recognition signal (42) in particular being generated by means of an asymmetrical encryption method.

7. A method in accordance with at least one of the preceding claims,
**characterized in that**
the transponder (40) displays a status, in particular by means of a light signal, with it being displayed whether an authorization to park in the respective parking bay (22, 24, 26, 27) is present.

8. A method in accordance with at least one of the preceding claims,
**characterized in that**
a warning signal is output if a vehicle (36, 44, 48) has parked outside the parking bays (22, 24, 26, 27).

9. A method in accordance with at least one of the preceding claims,
**characterized in that**
the parking space zone (20) is detected at least regionally by means of a monitoring system (14), preferably optically, by means of ultrasound, by means of radar and/or by means of floor sensors, with free and occupied parking bays (22, 24, 26, 27) being recognized by means of a recognition unit, in particular by means of image processing, preferably with reference to individual frames.

10. A method in accordance with claim 9,
**characterized in that**
a check is made by means of the monitoring system (14) whether a vehicle (36, 44, 48) identified as parked by means of the recognition signal (42) has actually parked on the determined parking bay (22, 24, 26, 27), with the identification of the transponder (40) and the parking bay (22, 24, 26, 27) used by the vehicle (36, 44, 48) only being transmitted to the registration server (32) in the event of a correct determination of the parked vehicle (36, 44, 48).

11. A method in accordance with claim 9 or claim 10,
**characterized in that**
a message signal is output if a vehicle (36, 44, 48) is detected in a parking bay (22, 24, 26, 27) by the monitoring system (14), with the position or presence of the vehicle (36, 44, 48) not having been determined by means of a recognition signal (42).

12. A system (10) comprising
at least one transponder (40);
at least one radio device (12);
a control device; and
a registration server (32) which is connected to the control device by means of a data link (30),
**characterized in that**
the system (10) is configured to carry out the method in accordance with any one of the preceding claims.

13. A system (10) in accordance with claim 12,
**characterized in that**
the radio device (12) is attached in or at street lamps, building fronts, street signs and/or traffic lights.

14. A system (10) in accordance with one of the claims 12 and 13,
**characterized by**
a monitoring system (14) for the optical, at least regional, detection of the parking space zone (20), with the monitoring system (14) comprising a camera system and a recognition unit which is configured to recognize free and occupied parking bays (22, 24, 26, 27), in particular by means of image processing, preferably with reference to individual frames.

## Revendications

1. Procédé de détection de véhicules garés (36, 44, 48),
dans lequel
- des zones de parking (22, 24, 26, 27) sont reconnues et/ou définies dans une aire de stationnement (20),
- un transpondeur (40) est placé dans ou sur un véhicule (36, 44, 48),
- le transpondeur (40) émet automatiquement à répétition un signal de reconnaissance (42),
- le signal de reconnaissance (42) est reçu par au moins un dispositif radio (12),
- une position du véhicule (36, 44, 48) est calculée et une identification du transpondeur (40) est déterminée au moyen d'un dispositif de commande sur la base du signal de reconnaissance (42),
- on constate si le véhicule (36, 44, 48) se trouve dans l'une des zones de parking (22, 24, 26, 27),
- en se basant sur le signal de reconnaissance (42), on détermine si le véhicule (36, 44, 48) est garé,
- dans la mesure où le véhicule (36, 44, 48) est garé dans l'une des zones de parking (22, 24, 26, 27)
- l'identification du transpondeur (40) et la zone de parking (22, 24, 26, 27) utilisée par le véhicule (36, 44, 48) sont transmises à un serveur d'enregistrement (32),
- le serveur d'enregistrement (32) émet un signal d'état pour la zone de parking utilisée (22, 24, 26, 27) en se basant sur l'identification du transpondeur (40),
**caractérisé en ce que**
le transpondeur (40) est réalisé pour reconnaître un mouvement du véhicule (36, 44, 48), une fréquence de survenance de l'émission de signaux de reconnaissance (42) étant réduite après une période de temps prédéterminée sans mouvement du véhicule (36, 44, 48).

2. Procédé selon la revendication 1,
**caractérisé en ce que**
en se basant sur l'identification du transpondeur (40), le serveur d'enregistrement (32) détermine un état d'autorisation pour la zone de parking utilisée (22, 24, 26, 27), l'état d'autorisation étant inclus dans le signal d'état, et/ou **en ce que**
des signaux d'état concernant une pluralité de zones de parking (22, 24, 26, 27) sont transmis à un serveur de stationnement (50) et/ou à un dispositif d'affichage mobile, le serveur de stationnement (50) et/ou le dispositif d'affichage mobile affichant un aperçu des zones de parking (22, 24, 26, 27) libres et occupées en se basant sur les signaux d'état.

3. Procédé selon l'une au moins des revendications précédentes,
**caractérisé en ce que**
un transpondeur (40) est délivré aux véhicules sans transpondeur (40) à une entrée de l'aire de stationnement (20).

4. Procédé selon l'une au moins des revendications précédentes,
**caractérisé en ce que**
une restriction d'accès (43) à l'aire de stationnement (20) n'est annulée que lorsqu'il est reconnu que le véhicule (36, 44, 48) est équipé d'un transpondeur (40) et qu'il est autorisé à se garer sur au moins une zone de parking (22, 24, 26, 27) de l'aire de stationnement (20).

5. Procédé selon l'une au moins des revendications précédentes,
**caractérisé en ce que**
un détenteur du véhicule et/ou un numéro d'immatriculation du véhicule est associé à l'identification du transpondeur (40) par le serveur d'enregistrement (32), et l'état d'autorisation est déterminé sur la base de données personnelles du détenteur du véhicule et/ou du numéro d'immatriculation du véhicule, et
de préférence, l'état d'autorisation est également déterminé sur la base de l'heure, du jour de la semaine et/ou de la position de la zone de parking utilisée (22, 24, 26, 27).

6. Procédé selon l'une au moins des revendications précédentes,
**caractérisé en ce que**
le transpondeur (40) émet le signal de reconnaissance (42) sous forme cryptée, le signal de reconnaissance (42) étant généré en particulier au moyen d'un procédé de cryptage asymétrique.

7. Procédé selon l'une au moins des revendications précédentes,
**caractérisé en ce que**
le transpondeur (40) indique un état, en particulier au moyen d'un signal lumineux, indiquant s'il existe une autorisation de stationnement sur la zone de parking respective (22, 24, 26, 27).

8. Procédé selon l'une au moins des revendications précédentes,
**caractérisé en ce que**
un signal d'avertissement est émis si un véhicule (36, 44, 48) est garé en dehors des zones de parking (22, 24, 26, 27).

9. Procédé selon l'une au moins des revendications précédentes,
**caractérisé en ce que**
au moyen d'un système de surveillance (14), l'aire de stationnement (20) est détectée au moins localement, de préférence par voie optique, par ultrasons, par radar et/ou par des capteurs au sol, les zones de parking libres et occupées (22, 24, 26, 27) étant reconnues au moyen d'une unité de reconnaissance, en particulier par traitement d'images, de préférence sur la base d'images individuelles.

10. Procédé selon la revendication 9,
**caractérisé en ce que**
le système de surveillance (14) permet de vérifier si un véhicule (36, 44, 48) identifié comme étant garé au moyen du signal de reconnaissance (42) est effectivement garé sur la zone de parking déterminée (22, 24, 26, 27), l'identification du transpondeur (40) et de la zone de parking (22, 24, 26, 27) utilisée par le véhicule (36, 44, 48) n'étant transmise au serveur d'enregistrement (32) qu'en cas de détermination correcte du véhicule garé (36, 44, 48).

11. Procédé selon la revendication 9 ou 10,
**caractérisé en ce que**
un signal de notification est émis si un véhicule (36, 44, 48) sur une zone de parking (22, 24, 26, 27) est détecté par le système de surveillance (14), la position ou la présence du véhicule (36, 44, 48) n'ayant pas été constatée au moyen d'un signal de reconnaissance (42).

12. Système (10), comprenant
au moins un transpondeur (40),
au moins un dispositif radio (12),
un dispositif de commande, et
un serveur d'enregistrement (32) qui est connecté au dispositif de commande au moyen d'une liaison de données (30),
**caractérisé en ce que**
le système (10) est réalisé pour mettre en oeuvre le procédé selon l'une des revendications précédentes.

13. Système (10) selon la revendication 12,
**caractérisé en ce que**
le dispositif radio (12) est monté dans ou sur des lampadaires, des façades, des panneaux de signalisation et/ou des feux de circulation.

14. Système (10) selon l'une des revendications 12 et 13,
**caractérisé par**
un système de surveillance (14) pour la détection optique, au moins locale, de l'aire de stationnement (20), le système de surveillance (14) comprenant un système de caméra(s) et une unité de reconnaissance qui est réalisée pour reconnaître des zones de parking libres et occupées (22, 24, 26, 27), en particulier au moyen d'un traitement d'images, de préférence sur la base d'images individuelles.
